# EUROPEAN PATENT APPLICATION

(11) **EP 1 072 971 A2**
(43) Date of publication of application: **31.01.2001**
(21) Application number: 00115571.2
(22) Date of filing: 19.07.2000
(51) Int. Cl.: G06F 9/38

(54) **Data processing apparatus and method**

(30) Priority: 27.07.1999 JP 21291099
(71) Applicant: NEC CORPORATION, Tokyo (JP)
(72) Inventor: Sugimoto, Hideki, Minato-ku, Tokyo (JP)
(74) Representative: Betten & Resch

(57) **Abstract**

An information processing apparatus includes a first fetch unit (11A), a first instruction executing unit (16A), a second fetch unit (11A), a second instruction executing unit (16B), and a conflict judging unit (14). The first fetch unit (11A) fetches a first instruction of a first instruction sequence. The first instruction executing unit (16A) executes the first instruction. The second fetch unit (11A) fetches a second instruction of a second instruction sequence. The second instruction executing unit (16B) executes the second instruction. The conflict judging unit (14) judges whether or not the first and second instructions can be executed at a same time. The first and second instruction executing units (16A, 16B) execute at the same time the first and second instructions judged to be executed at the same time by the conflict judging unit (14), respectively.

## Description

### Background of the Invention

### 1. Field of the Invention

The present invention relates to an information processing apparatus and an information processing method which can execute a plurality of instructions in parallel. More particularly, the present invention relates to a technique for substantially increasing the number of instructions to be executed in parallel.

### 2. Description of the Related Art

Conventionally, a super scalar technique has been well known as a technique for executing a plurality of instructions in parallel. An information processing apparatus to which this technique is applied firstly investigates whether or not a plurality of instructions included in a single instruction sequence or stream can be executed at the same time. If it is judged that they can be executed at the same time, a plurality of instructions which can be executed at the same time are assigned to a plurality of operation units, respectively. Thus, the plurality of instructions are executed by the plurality of operation units at the same time. Hence, a process speed can be improved as the whole information processing apparatus.

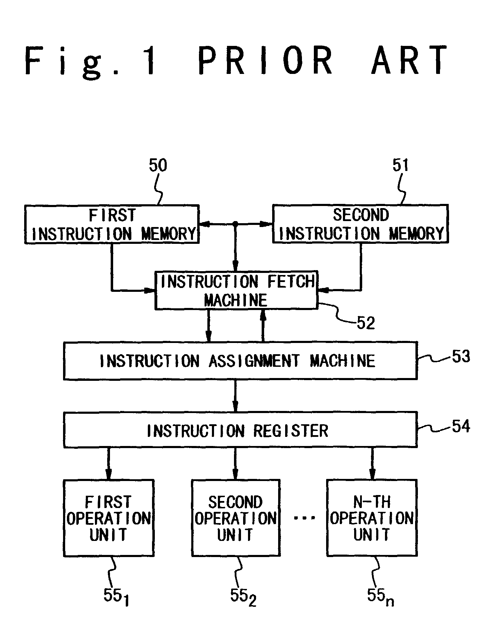

Fig. 1 shows one example of such a conventional information processing apparatus. This information processing apparatus is provided with a first instruction memory 50, a second instruction memory 51, a instruction fetch machine 52, a instruction assignment machine 53, a instruction register 54 and n operation units 55ₗ to 55ₙ.

The first instruction memory 50 stores therein a main routine, and the second instruction memory 51 stores therein a sub routine. This sub routine is called from the main routine. The instruction fetch machine 52 selects any of the first instruction memory 50 and the second instruction memory 51 in accordance with a content of a program counter (not shown). Then, a plurality of instructions (for example, four instructions) are fetched from the selected first instruction memory 50 or second instruction memory 51, at the same time, and sent to the instruction assignment machine 53.

The instruction assignment machine 53 analyzes the plurality of instructions received from the instruction fetch machine 52, and checks whether or not the plurality of instructions can be executed at the same time. This check is done by investigating whether or not there is a dependent relation between the plurality of instructions, actually, whether or not a certain instruction in the plurality of instructions uses the execution results of the other instructions. So, the plurality of instructions that can be executed at the same as the judged result are simultaneously sent to the instruction register 54.

Each of the first to n-th operation units 55ₗ to 55ₙ decodes the instruction stored in the instruction register 54, and carries out a process corresponding to this decoded result. Thus, the plurality of instructions are executed at the same time. Hence, the process speed is improved as the whole information processing apparatus.

However, this conventional information processing apparatus has only one instruction fetch machine. Thus, the contents of the first and second instruction memories are sequentially fetched, which results in a problem that it takes a long time to carry out the instruction fetch.

Also, this conventional information processing apparatus selects the plurality of instructions that can be executed at the same time, from a single instruction sequence. However, there is the dependent relation between the plurality of instructions included in the single instruction sequence, in many cases. Thus, the number of instructions that can be executed at the same time is limited in many cases. This results in a problem that even if the number of operation units is increased in order to improve the process speed, a simultaneous process rate is only dropped, and a usage efficiency of the operation unit is dropped.

As a technique for solving the above-mentioned problems, for example, Japanese Laid Open Patent Application (JP-A-Heisei, 4-360234) discloses Information Processor And Command Scheduler. This technique is provided with a plurality of instruction preparing devices for carrying out a former process in a instruction pipe line, namely, a instruction fetch and a instruction decode. Each instruction preparing device is responsible for processing one instruction stream (instruction sequence). A instruction decode result outputted by the instruction preparing device is scheduled by the instruction scheduler, and sent to each function unit. Then, the execution is done by the function unit.

According to this technique, instructions from different instruction streams are edited in parallel with each other. Thus, large parallel property can be attained without restriction on the dependent property between the instructions. As a result, it is possible to improve the usage efficiency of each function unit and also attain a high throughput.

However, the technique disclosed in Japanese Laid Open Patent Application (JP-A-Heisei, 4-360234) has the premise that there is no dependent relation between a instruction included in a certain instruction sequence and a instruction included in another instruction sequence. For this reason, a hardware for processing each instruction sequence, for example, a register file is mounted for each instruction sequence. Thus, although a plurality of instructions can be fetched at the same time, the dependent relation can not be detected between instructions included in each instruction sequence. After all, the process can be done only for each instruction sequence. Hence, it is impossible to improve the usage efficiency of the operation unit.

### Summary of the Invention

The present invention is accomplished in view of the above mentioned problems. Therefore, an object of the present invention is to provide an information processing apparatus and an information processing method, which even if there is a dependent relation between instructions included in a plurality of instruction sequences, can carry out a parallel process and can improve a whole process speed.

In order to achieve an aspect of the present invention, an information processing apparatus, includes: a first fetch unit fetching a first instruction of a first instruction sequence; a first instruction executing unit executing the first instruction; a second fetch unit fetching a second instruction of a second instruction sequence; a second instruction executing unit executing the second instruction; and a conflict judging unit judging whether or not the first and second instructions can be executed at a same time, and wherein the first and second instruction executing units execute at the same time the first and second instructions judged to be executed at the same time by the conflict judging unit, respectively.

In this case, the conflict judging unit starts judging the first and second instructions in response to a call instruction of the first instruction sequence and finishes judging the first and second instructions in response to a return instruction of the second instruction sequence, the second instruction sequence being called in response to the call instruction and the first instruction sequence being returned in response to the return instruction.

Also in this case, when an operand of the call instruction is included in a specific instruction to be executed by the first instruction executing unit after the execution of the call instruction, the conflict judging unit judges that the specific instruction and the second instruction cannot be executed at the same time.

Further in this case, the conflict judging unit includes: a register to which an address of the operand of the call instruction is set in response to the call instruction and in which the address is cleared in response to the return instruction; a comparator comparing the address set to the register with an address of an operand of the specific instruction; and a gate circuit generating a signal indicating whether or not the specific instruction and the second instruction can be executed at the same time, based on the comparing result.

In this case, the conflict judging unit starts judging the first and second instructions in response to a first call instruction of the first instruction sequence and finishes judging the first and second instructions in response to a first return instruction of the second instruction sequence, the second instruction sequence being called in response to the first call instruction and the first instruction sequence being returned in response to the first return instruction and starts judging the first and second instructions in response to a second call instruction of the second instruction sequence and finishes judging the first and second instructions in response to a second return instruction of the first instruction sequence, the first instruction sequence being called in response to the second call instruction and the second instruction sequence being returned in response to the second return instruction.

Also in this case, when an operand of the first call instruction is included in a first specific instruction to be executed by the first instruction executing unit after an execution of the first call instruction, the conflict judging unit judges that the first specific instruction and the second instruction cannot be executed at the same time and when an operand of the second call instruction is included in a second specific instruction to be executed by the second instruction executing unit after an execution of the second call instruction, the conflict judging unit judges that the second specific instruction and the first instruction cannot be executed at the same time.

Further in this case, the conflict judging unit includes: a first register to which a first address of the operand of the first call instruction is set in response to the first call instruction and in which the first address is cleared in response to the first return instruction; a first comparator comparing the first address set to the first register with an address of an operand of the first specific instruction to generate a first comparing result; a first gate circuit generating a first signal indicating whether or not the first specific instruction and the second instruction can be executed at the same time, based on the first comparing result; a second register to which a second address of the operand of the second call instruction is set in response to the second call instruction and in which the second address is cleared in response to the second return instruction; a second comparator comparing the second address set to the second register with an address of an operand of the second specific instruction to generate a second comparing result; and a second gate circuit generating a second signal indicating whether or not the second specific instruction and the first instruction can be executed at the same time, based on the second comparing result.

In this case, an information processing apparatus further includes: a first register file corresponding to the first instruction sequence; and a second register file corresponding to the second instruction sequence, and wherein when data used in the second instruction of the second instruction sequence called in response to a call instruction of the first instruction sequence is not written in the second register file, the data is outputted from the first register file through a first path, and wherein when the data is written in the second register file, the data is outputted from the second register file through a second path, and wherein when the second instruction is executed based on the data outputted through one of the first and second paths to generate an executing result, the executing result is written to the second register file.

Also in this case, an information processing apparatus further includes: a flag set when the executing result is written to the second register file, and wherein the data is outputted through the first path when the flag is not set, and the data is outputted through the second path when the flag is set.

Further in this case, the flag is cleared when the second instruction sequence is called in response to the call instruction of the first instruction sequence.

In order to achieve another aspect of the present invention, an information processing method, includes: (a) fetching a plurality of first instructions of a first instruction sequence; (b) fetching a plurality of second instructions of a second instruction sequence called in response to a call instruction of the plurality of first instructions; (c) judging whether or not the first instruction and the second instruction of the plurality of fetched first and second instructions can be executed at a same time; and (d) executing at the same time the first and second instructions judged to be executed at the same time.

In this case, the (c) includes starting judging the first and second instructions in response to the call instruction and finishing judging the first and second instructions in response to a return instruction of the plurality of second instructions, the first instruction sequence being returned in response to the return instruction.

Also in this case, when an operand of the call instruction is included in a specific instruction, of the first instruction sequence, executed after an execution of the call instruction, the (c) includes judging that the specific instruction and the second instruction cannot be executed at the same time.

Further in this case, the (c) includes: setting to a register an address of the operand of the call instruction in response to the call instruction; clearing the address set to the register in response to the return instruction; comparing the address set to the register with an address of an operand of the specific instruction; and generating a signal indicating whether or not the specific instruction and the second instruction can be executed at the same time, based on the comparing result.

In this case, the (c) includes starting judging the first and second instructions in response to a first call instruction of the first instruction sequence and finishes judging the first and second instructions in response to a first return instruction of the second instruction sequence, the second instruction sequence being called in response to the first call instruction and the first instruction sequence being returned in response to the first return instruction and starts judging the first and second instructions in response to a second call instruction of the second instruction sequence and finishes judging the first and second instructions in response to a second return instruction of the first instruction sequence, the first instruction sequence being called in response to the second call instruction and the second instruction sequence being returned in response to the second return instruction.

Also in this case, when an operand of the first call instruction is included in a first specific instruction, of the first instruction sequence, to be executed after an execution of the first call instruction, the (c) includes judging that the first specific instruction and the second instruction cannot be executed at the same time and when an operand of the second call instruction is included in a second specific instruction, of the second instruction sequence, to be executed after an execution of the second call instruction, the (c) includes judging that the second specific instruction and the first instruction cannot be executed at the same time.

Further in this case, the (c) includes: setting to a first register a first address of the operand of the first call instruction in response to the first call instruction; clearing the first address set to the first register in response to the first return instruction; comparing the first address set to the first register with an address of an operand of the first specific instruction to generate a first comparing result; generating a first signal indicating whether or not the first specific instruction and the second instruction can be executed at the same time, based on the first comparing result; setting to a second register a second address of the operand of the second call instruction in response to the second call instruction; clearing the second address set to the second register in response to the second return instruction; comparing the second address set to the second register with an address of an operand of the second specific instruction to generate a second comparing result; and generating a second signal indicating whether or not the second specific instruction and the first instruction can be executed at the same time, based on the second comparing result.

In this case, an information processing method further includes: (e) providing a first register file corresponding to the first instruction sequence; (f) providing a second register file corresponding to the second instruction sequence, (g) outputting data used in the second instruction of the second instruction sequence called in response to the call instruction, from the first register file when the data is not written in the second register file; and (h) outputting the data from the second register file when the data is written in the second register file; and (1) writing an executing result when the second instruction is executed based on the data outputted at one of the (g) and (h), to the second register file.

Also in this case, an information processing method further includes: (j) setting a flag when the executing result is written to the second register file, and wherein the data is outputted at the (g) when the flag is not set, and the data is outputted at the (h) when the flag is set.

Further in this case, an information processing method further includes: (k) clearing the flag when the second instruction sequence is called in response to the call instruction of the first instruction sequence.

### Brief Description of the Drawings

Fig. 1 is a block diagram showing an example of a conventional information processing apparatus;
Fig. 2 is a block diagram showing a configuration of an information processing apparatus according to a first embodiment of the present invention;
Fig. 3 is a block diagram showing a detailed configuration of a conflict detecting machine shown in Fig. 2;
Fig. 4 is a view showing an example of a program used to describe an operation of the information processing apparatus according to the first embodiment of the present invention;
Fig. 5 is a block diagram showing a configuration of an information processing apparatus according to a second embodiment of the present invention;
Fig. 6 is a block diagram showing a detailed configuration of a conflict detecting machine shown in Fig. 5;
Fig. 7 is a view showing an example of a program used to describe an operation of the information processing apparatus according to the second embodiment of the present invention;
Fig. 8 is a block diagram showing a configuration of a register file of an information processing apparatus according to a third embodiment of the present invention; and
Fig. 9 is a view showing an example of a program used to describe an operation of the information processing apparatus according to the third embodiment of the present invention.

### Description of the Preferred Embodiments

Embodiments of the present invention will be described below with reference to the attached drawings.

An information processing apparatus according to embodiments of the present invention will be described below with reference to the attached drawings. Let us suppose that this information processing apparatus is constituted by RISC (Reduce Instruction Set Computer).

### (First Embodiment)

In the information processing apparatus according to this first embodiment, instructions included in a first instruction sequence or stream and instructions included in a second instruction sequence or stream are executed at the same time. Also, in this kind of the information processing apparatus, the instructions included in the respective instruction sequences are sequentially fetched for each plurality of instructions (for example, four instructions). However, for the purpose of simple illustration, let us suppose that the instructions included in the respective instruction sequences are sequentially fetched, one by one.

Also, this information processing apparatus uses a two-operand type of a instruction set. Thus, each instruction is basically provided with an operation code section and an operand indicator. The operand indicator is composed of a first operand indicator and a second operand indicator. The first operand indicator indicates a register or an immediate value as a first operand. The second operand indicator indicates a register as a second operand. Each instruction calculates a content of the register indicated as the first operand or the immediate value and a content of the register indicated by the second operand to store the calculated result in the register indicated as the second operand.

If the register is indicated as any one of the first and second operands, for example, any of 32 registers r0 to r32 is indicated. If the register r0 is indicated by any one of the first and second operand indicators, the process is carried out under the assumption that the content of the operand is zero, irrespectively of the content of the register r0.

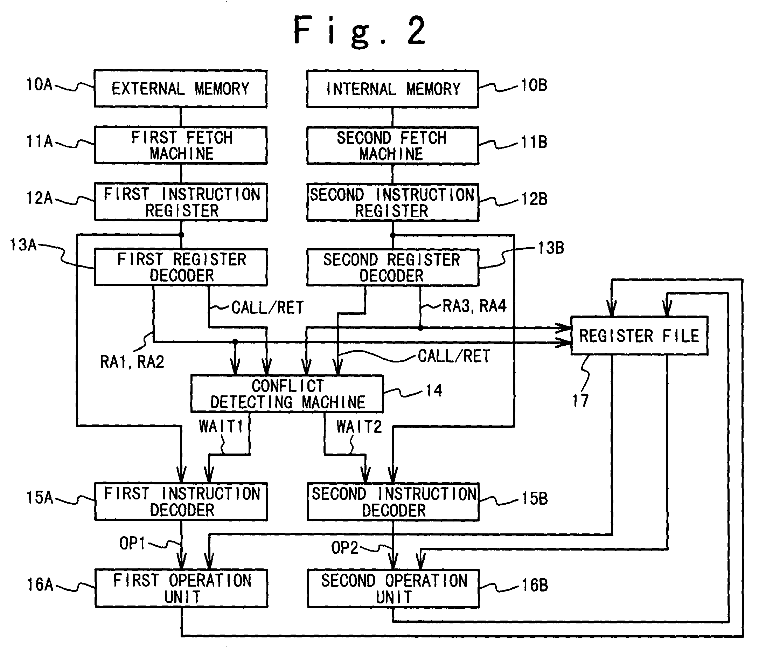

Fig. 2 is a block diagram showing the configuration of the information processing apparatus according to the first embodiment of the present invention. This information processing apparatus is provided with an external memory 10A, an internal memory 10B, a first fetch machine 11A, a second fetch machine 11B, a first instruction register 12A, a second instruction register 12B, a first register decoder 13A, a second register decoder 13B, a conflict detecting machine 14, a first instruction decoder 15A, a second instruction decoder 15B, a first operation unit 16A, a second operation unit 16B and a register file 17. By the way, the respective members are mounted in one LSI except the external memory 10A. A CPU (not shown) controls the respective members mounted in the LSI.

The external memory 10A is composed of, for example, RAM. This external memory 10A mainly stores therein a main routine of a main portion of a program. A plurality of instructions stored in this external memory 10A is referred to as a first instruction sequence. Also, the internal memory 10B is composed of, for example, ROM. This internal memory 10B mainly stores therein a sub routine for attaining various functions. A plurality of instructions stored in this internal memory 10B is referred to as a second instruction sequence.

The main routine stored in the external memory 10A is executed while the main routine calls the sub routine stored in the internal memory 10B. Also, the external memory 10A may store therein the sub routine in addition to the main routine. The sub routine stored in this external memory 10A is called from the sub routine in the internal memory 10B. Also, it may be designed such that the main routine is stored in the internal memory 10B, and the sub routine is stored in the external memory 10A, respectively.

The first fetch machine 11A fetches a instruction from the external memory 10A in accordance with a content of a first program counter (not shown) to send to the first instruction register 12A. The second fetch machine 11B fetches a instruction from the internal memory 10B in accordance with a second program counter (not shown) to send to the second instruction register 12B.

The first instruction register 12A transiently stores therein the instruction from the first fetch machine 11A. The instruction stored in this first instruction register 12A is sent to the first register decoder 13A and the first instruction decoder 15A. Also, the second instruction register 12B transiently stores therein the instruction from the second fetch machine 11B. The instruction stored in this second instruction register 12B is sent to the second register decoder 13B and the second instruction decoder 15B.

The first register decoder 13A decodes the first operand indicator of the instruction stored in the first instruction register 12A to generate a first register address RA1, and also decodes the second operand indicator of the instruction stored in the first instruction register 12A to generate a second register address RA2. By the way, the first register address RA1 is not generated if the register is not indicated by the first operand indicator. The second register address RA2 is not generated if the register is not indicated by the second operand indicator. The first and second register addresses RA1, RA2 generated by the first register decoder 13A are sent to the conflict detecting machine 14 and the register file 17.

The first register decoder 13A decodes the operation code section of the instruction stored in the first instruction register 12A to thereby generate a signal CALL indicative of a call instruction and a signal RET indicative of a return instruction (hereafter, referred to as a RET instruction). The signal CALL and the signal RET which are generated by the first register decoder 13A are sent to the conflict detecting machine 14.

Similarly, the second register decoder 13B decodes the first operand indicator of the instruction stored in the second instruction register 12B to generate a third register address RA3, and also decodes the second operand indicator of the instruction stored in the second instruction register 12B to generate a fourth register address RA4. By the way, the third register address RA3 is not generated if the register is not indicated by the first operand indicator. The fourth register address RA4 is not generated if the register is not indicated by the second operand indicator. The third and fourth register addresses RA3, RA4 generated by the second register decoder 13B are sent to the conflict detecting machine 14 and the register file 17.

The second register decoder 13B decodes the operation code section of the instruction stored in the second instruction register 12B to thereby generate a signal CALL and a signal RET. The signal CALL and the signal RET which are generated by the second register decoder 13B are sent to the conflict detecting machine 14.

The conflict detecting machine 14 generates a signal WAIT1 and a signal WAIT2, in accordance with the first and second register addresses RA1, RA2, the signal CALL and the signal RET from the first register decoder 13A, and the third and fourth register addresses RA3, RA4, the signal CALL and the signal RET from the second register decoder 13B. The conflict detecting machine 14 sets the signal WAIT1 to [0] if the instruction stored in the first instruction register 12A can be executed simultaneously with the instruction stored in the second instruction register 12B, and it sets the signal WAIT1 to [1] if the simultaneous execution is impossible. Also, the conflict detecting machine 14 sets the signal WAIT2 to [0] if the instruction stored in the second instruction register 12B can be executed simultaneously with the instruction stored in the first instruction register 12A, and it sets the signal WAIT2 to [1] if the simultaneous execution is impossible. The signal WAIT1 is sent to the first instruction decoder 15A, and the signal WAIT2 is sent to the second instruction decoder 15B, respectively. This conflict detecting machine 14 will be detailed later.

The first instruction decoder 15A, if the signal WAIT1 from the conflict detecting machine 14 is at [0], decodes the operation code section of the instruction stored in the first instruction register 12A to generate a first decode signal OP1. This first decode signal OP1 is sent to the first operation unit 16A. If the first operand indicator of the instruction stored in the first instruction register 12A is an immediate value, the immediate value is sent to the first operation unit 16A. On the other hand, if the signal WAIT1 from the conflict detecting machine 14 is at [1], the first instruction decoder 15A generates a first inhibition signal for inhibiting the operation in the first operation unit 16A to send to the first operation unit 16A.

Similarly, the second instruction decoder 15B, if the signal WAIT2 from the conflict detecting machine 14 is at [0], decodes the operation code section of the instruction stored in the second instruction register 12B to generate a second decode signal OP2. This second decode signal OP2 is sent to the second operation unit 16B. If the first operand indicator of the instruction stored in the second instruction register 12B is an immediate value, the immediate value is sent to the second operation unit 16B. On the other hand, if the signal WAIT2 from the conflict detecting machine 14 is at [1], the second instruction decoder 15B generates a second inhibition signal for inhibiting the operation in the second operation unit 16B to send to the second operation unit 16B.

The first operation unit 16A, in accordance with the first decode signal OP1 from the first instruction decoder 15A, performs the calculation on the data from the register file 17 or the immediate value from the first instruction register 12A to write the calculation result to the register file 17. So, the execution of one instruction is ended in the first operation unit 16A. On the other hand, the operation in the first operation unit 16A is inhibited if the first instruction decoder 15A sends the first inhibition signal.

Similarly, the second operation unit 16B, in accordance with the second decode signal OP2 from the second instruction decoder 15B, performs the calculation on the data from the register file 17 or the immediate value from the second instruction register 12B to write the calculation result to the register file 17. So, the execution of one instruction is ended in the second operation unit 16B. on the other hand, the operation in the second operation unit 16B is inhibited if the second instruction decoder 15B sends the second inhibition signal.

In this first embodiment, it is assumed that the instructions included in the first instruction sequence are sequentially fetched one by one. So, one first operation unit 16A is mounted. However, two or more operation units are mounted if the plurality of instructions included in the first instruction sequence are fetched at the same time. In this case, a dependent relation is detected between the plurality of fetched instructions, and a dependent relation is detected between the plurality of fetched instructions and the instructions in the second instruction sequence. Each of the plurality of instructions that can be executed at the same time is assigned to any of the plurality of operation units, in accordance with the detected result. Similarly, it is assumed that the instructions included in the second instruction sequence are sequentially fetched one by one. So, one second operation unit 16B is mounted. If the plurality of instructions included in the second instruction sequence are fetched at the same time, two or more operation units are mounted. Also in this case, each of the plurality of instructions that can be executed at the same time is assigned to any of the plurality of operation units, similarly to the above-mentioned case.

The register file 17 is composed of, for example, a four-port RAM having 32 registers r0 to r31. When the first and second register addresses RA1, RA2 are sent by the first register decoder 13A to the register file 17, data are read out from the register indicated by the first register address RA1 and the register indicated by the second register address RA2, respectively to be sent to the first operation unit 16A. Also, the data from the first operation unit 16A is written to the register indicated by the second register address RA2.

Also, when the third and fourth register addresses RA3, RA4 are sent by the second register decoder 13B to the register file 17, data are read out from the register indicated by the third register address RA3 and the register indicated by the fourth register address RA4. respectively to be sent to the second operation unit 16B. Also, the data from the second operation unit 16B is written to the register indicated by the fourth register address RA4.

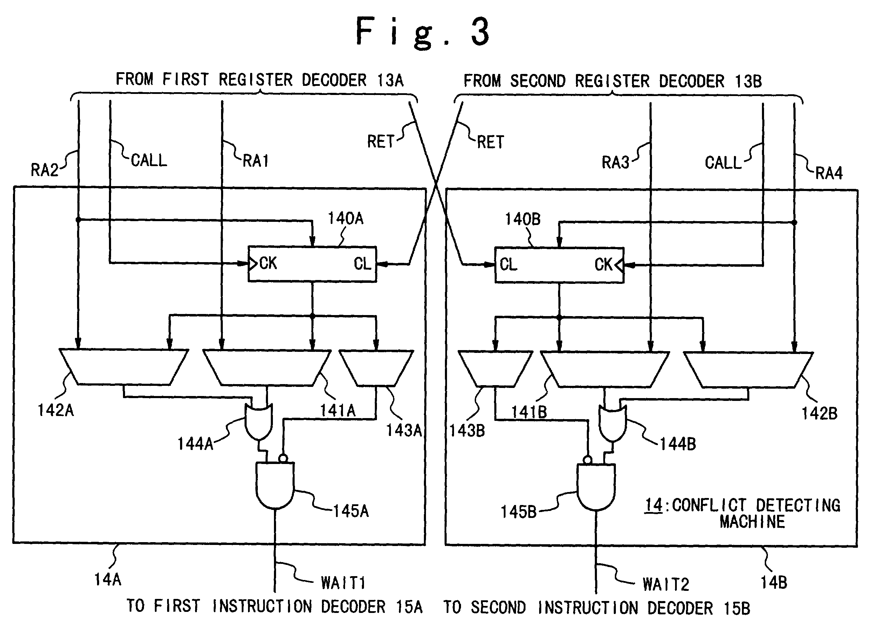

The detailed configuration of the conflict detecting machine 14 will be described below with reference to a block diagram shown in Fig. 3.

As shown in Fig. 3, this conflict detecting machine 14 is composed of a first conflict detector 14A for generating the signal WAIT1, and a second conflict detector 14B for generating the signal WAIT2. The first conflict detector 14A detects a conflict when the first and second instruction sequences are operated at the same time, since the second instruction sequence is called from the call instruction in the first instruction sequence. Also, the second conflict detector 14B detects a conflict when the second and first instruction sequences are operated at the same time, since the first instruction sequence is called from the call instruction in the second instruction sequence.

At first, the first conflict detector 14A is described. This first conflict detector 14A is composed of a first register 140A, a first source comparator 141A, a first destination comparator 142A, a first zero detecting circuit 143A, a first OR gate 144A and a first gate circuit 145A.

The first register 140A stores therein a register address of a register indicated by the call instruction in the first instruction sequence (hereafter, referred to as a function return value stored register). A process result in the second instruction sequence is stored in the function return value stored register. Thus, it is inhibited that each instruction in the first instruction sequence changes a content of the function return value stored register until the execution of the RET instruction in the second instruction sequence.

The second register address RA2 from the first register decoder 13A is sent to an input terminal of the first register 140A. The signal CALL from the first register decoder 13A is sent to a clock input terminal CK of the first register 140A. The signal RET from the second register decoder 13B is sent to a clear input terminal CL of the first register 140A. Thus, this first register 140A stores therein the register address of the function return value stored register when the call instruction in the first instruction sequence is executed. A content of the first register 140A is cleared when the RET instruction in the second instruction sequence is executed.

Thus, the first register 140A stores therein the register address of the function return value stored register during the execution of the second instruction sequence called from the first instruction sequence. The content of the first register 140A is sent to the first source comparator 141A, the first destination comparator 142A and the first zero detecting circuit 143A.

The first source comparator 141A compares the first register address RA1 from the first register decoder 13A with the register address from the first register 140A. The first source comparator 141A outputs [1] as the comparison result signal if they agree with each other, and outputs [0] if they do not agree. That is, this comparison result signal becomes at [1] if the function return value stored register indicated by the call instruction in the first instruction sequence is accessed as a first operand of a instruction placed after this call instruction (hereafter, referred to as a first specification instruction), in the condition that the first and second instruction sequences are executed at the same time. This implies that the register indicated as the first operand of the first specification instruction conflicts with the register used in the second instruction sequence and thereby the first specification instruction can not be executed simultaneously with the instruction in the second instruction sequence. On the other hand, the comparison result signal becomes at [0] if the conflict does not occur. This implies that the instruction in the second instruction sequence and the first specification instruction can be executed at the same time. The comparison result signal outputted from the first source comparator 141A is sent to the first OR gate 144A. In addition, this first source comparator 141A outputs [0] even if the first register decoder 13A does not output the first register address RA1 to the first source comparator 141A.

The first destination comparator 142A compares the second register address RA2 from the first register decoder 13A with the register address from the first register 140A. The first destination comparator 142A outputs [1] as the comparison result signal if they agree with each other, and outputs [0] if they do not agree. This comparison result signal is equal to the comparison result signal outputted from the first source comparator 141A except that a register conflicting with the register used in the second instruction sequence is the register used as the second operand of the first specification instruction. The comparison result signal from the first destination comparator 142A is sent to the first OR gate 144A. In addition, the first destination comparator 142A outputs [0] even if the second register address RA2 is not sent to the first destination comparator 142A.

The first OR gate 144A carries out the logical OR between the comparison result signal from the first source comparator 141A and the comparison result signal from the first destination comparator 142A to send its result to the first gate circuit 145A. Thus, the first OR gate 144A outputs [1] if the register indicated as the first operand or the second operand of the first specification instruction in the first instruction sequence conflicts with the register used in the second instruction sequence, and outputs [0] if it does not conflict.

The first zero detecting circuit 143A detects whether or not the register address from the first register 140A is zero. That is, this first zero detecting circuit 143A outputs [1] as a zero detection signal if the register address from the first register 140A is zero, and outputs [0] if it is not zero. This signal from the first zero detecting circuit 143A is sent to the first gate circuit 145A.

The first gate circuit 145A outputs [1] as the signal WAIT1 if the signal from the first OR gate 144A is at [1] and the zero detection signal from the first zero detecting circuit 143A is at [0], and outputs [0] if it is not in the above mentioned case. This signal WAIT1 from the first gate circuit 145A is sent to the first instruction decoder 15A.

By the way, the first zero detecting circuit 143A sets the zero detection signal to [1] if the register r0 is indicated as the function return value stored register of the call instruction. Usually, if the function return value is unnecessary, the register r0 is indicated as the value storing register. Thus, if the second instruction sequence is called from the call instruction indicating the register r0 as the function return value stored register, the signal WAIT1 from the first gate circuit 145A becomes always at [0]. Hence, there is no case that the instruction included in the first instruction sequence and the instruction included in the second instruction sequence conflict with each other.

The second conflict detector 14B will be described below. This second conflict detector 14B is composed of a second register 140B, a second source comparator 141B, a second destination comparator 142B, a second zero detecting circuit 143B, a second OR gate 144B and a second gate circuit 145B.

The second register 140B stores therein a register address of a function return value stored register indicated by the call instruction in the second instruction sequence. A process result in the first instruction sequence is stored in the function return value stored register. Thus, it is inhibited that each instruction in the second instruction sequence changes a content of the function return value register until the execution of the RET instruction in the first instruction sequence.

The fourth register address RA4 from the second register decoder 13B is sent to an input terminal of the second register 140B. The signal CALL from the second register decoder 13B is inputted to a clock input terminal CK. The signal RET from the first register decoder 13A is inputted to a clear input terminal CL. So, this second register 140B stores the register address of the function return value stored register when the call instruction in the second instruction sequence is executed. A content of the second register 140B is cleared when the RET instruction in the first instruction sequence is executed.

Thus, the second register 140B stores the register address of the function return value stored register during the execution of the first instruction sequence called from the second instruction sequence. The content of the second register 140B is sent to the second source comparator 141B, the second destination comparator 142B and the second zero detecting circuit 143B.

The second source comparator 141B compares the third register address RA3 from the second register decoder 13B with the register address from the second register 140B. It outputs [1] as the comparison result signal if they agree with each other, and outputs [0] if they do not agree. That is, this comparison result signal becomes at [1] if the function return value stored register indicated by the call instruction in the second instruction sequence is accessed as a first operand (hereafter, referred to as a second specification instruction) of a instruction placed after this call instruction, in the condition that the second and first instruction sequences are executed at the same time. This implies that the register indicated as the first operand of the second specification instruction conflicts with the register used in the first instruction sequence and thereby the second specification instruction can not be executed simultaneously with the instruction in the first instruction sequence. On the other hand, the comparison result signal becomes at [0] if the conflict does not occur. This implies that the instruction in the first instruction sequence and the second specification instruction can be executed at the same time. The comparison result signal outputted by the second source comparator 141B is sent to the second OR gate 144B. In addition, this second source comparator 141B outputs [0] even if the second register decoder 13B does not output the third register address RA3.

The second destination comparator 142B compares the fourth register address RA4 from the second register decoder 13B with the register address from the second register 140B. It outputs [1] as the comparison result signal if they agree with each other, and outputs [0] if they do not agree. This comparison result signal is equal to the comparison result signal outputted by the second source comparator 141B except that a register conflicting with the register used in the first instruction sequence is the register used as the second operand of the second specification instruction. The comparison result signal from the second destination comparator 142B is sent to the second OR gate 144B. In addition, the second destination comparator 142B outputs [0] even if the fourth register address RA4 is not sent.

The second OR gate 144B carries out the logical OR between the comparison result signal from the second source comparator 141B and the comparison result signal from the second destination comparator 142B, and sends its result to the second gate circuit 145B. Thus, the second OR gate 144B outputs [1] if the register indicated as the first operand or the second operand of the second specification instruction in the second instruction sequence conflicts with the register used in the first instruction sequence, and outputs [0] if it does not conflict.

The second zero detecting circuit 143B detects whether or not the register address from the second register 140B is zero. That is, this second zero detecting circuit 143B outputs [1] as a zero detection signal if the register address from the second register 140B is zero, and outputs [0] if it is not zero. This signal from the second zero detecting circuit 143B is sent to the second gate circuit 145B.

The second gate circuit 145B outputs [1] as the signal WAIT2 if the signal from the second OR gate 144B is at [1] and the zero detection signal from the second zero detecting circuit 143B is at [0], and outputs [0] if it is not in the above mentioned case. This signal WAIT2 from the second gate circuit 145B is sent to the second instruction decoder 15B.

By the way, the operations when the register r0 is indicated as the function return value stored register of the call instruction is equal to the operations when the second instruction sequence is called from the call instruction in the first instruction sequence.

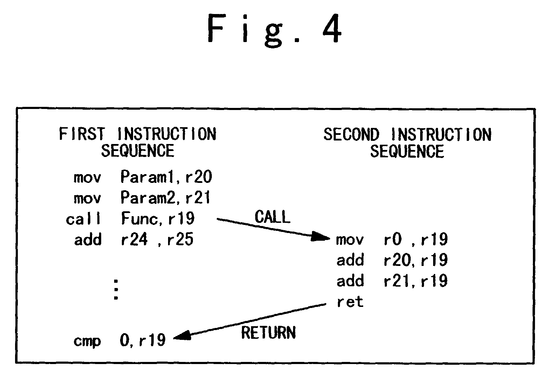

The operations of the information processing apparatus having the above-mentioned configuration will be described below with reference to the case of an execution of a program shown in Fig. 4. Now, let us suppose that zero is stored as an initial value in the first and second registers 140A, 140B in the conflict detecting machine 14. Also, the procedure from the fetch of the instruction to the completion of the execution is referred to as a instruction cycle.

A program of the first instruction sequence is stored in the external memory 10A. This program progresses in the following order. That is, a mov instruction [mov Param1, r20] sets a parameter Param1 for a register r20, and a mov instruction [mov Param2, r21] sets a parameter Param2 for a register r21. And, a call instruction [call Func, r19] indicates a register r19 as the function return value stored register, and accordingly calls a second instruction sequence indicated by Func. Further, an add instruction [add r24, r25] adds a content of a register r24 to a content of a register r25. Then, if the RET instruction is executed in the second instruction sequence, it is investigated whether or not a content of the register r19 is zero by a com instruction [comp 0, r19].

On the other hand, a program constituting the second instruction sequence is stored in the internal memory 10B. In this program, a mov instruction [mov r0, r19] clears the content of the register r19 to zero, and an add instruction [add r20, r19] instruction adds a content of the register r20 to the content of the register r19, and an add instruction [add r21, r19] adds a content of the register r21 to the content of the register r19. Then, in response to on the RET instruction, the CPU returns to the first instruction sequence.

In this information processing apparatus, the first fetch machine 11A firstly fetches the mov instruction [mov Param1, r20] from the external memory 10A to store the first instruction register 12A. At this time, the second fetch machine 11B is not still operated. The first register decoder 13A decodes the second operand indicator of the instruction stored in the first instruction register 12A to thereby generate the second register address RA2 indicating the register r20, and then sends to the conflict detecting machine 14 and the register file 17. Also, the first register decoder 13A decodes the operation code section of the instruction stored in the first instruction register 12A. In this case, the first register decoder 13A does not generate the signal CALL and the signal RET since the instruction is the mov instruction. Hence, the signal CALL and the signal RET are not sent to the conflict detecting machine 14.

The first register 140A in the conflict detecting machine 14 still holds the zero that is the initial value, since the signal CALL is not sent from the first register decoder 13A. Thus, the first zero detecting circuit 143A outputs [1] as the zero detection signal. As a result, the first gate circuit 145A generates [0] as the signal WAIT1 irrespectively of the first and second register addresses RA1, RA2, to send to the first instruction decoder 15A.

The first instruction decoder 15A, since the signal WAIT1 from the conflict detecting machine 14 is at [0], decodes the operation code section of the instruction stored in the first instruction register 12A to generate a signal MOV indicative of the mov instruction as the first decode signal OP1. This signal MOV is sent to the first operation unit 16A. Also, the first instruction decoder 15A sends the value of the first operand indicator of the instruction sent from the first register decoder 13A, in its original state, as the parameter Param1, to the first operation unit 16A.

The first operation unit 16A, since the signal MOV is inputted from the first instruction decoder 15A, passes the parameter Param1 from the first instruction decoder 15A, in its original state. The parameter Param1 passed through the first operation unit 16A is stored in the register r20 indicated by the second register address RA2, in the register file 17. Accordingly, the execution of the mov instruction [mov Param1, r20] is completed.

The next mov instruction [mov param2, r21] is also executed similarly to the above-mentioned case. As a result, the parameter Param2 is stored in the register r21 indicated by the second register address RA2, in the register file 17.

Next, the first fetch machine 11A fetches the call instruction [call Func, r19] from the external memory 10A to store in the first instruction register 12A. The first register decoder 13A decodes the second operand indicator of the instruction stored in the first instruction register 12A to thereby generate the second register address RA2 indicating the register r19, and then sends to the conflict detecting machine 14 and the register file 17. Simultaneously, the first register decoder 13A decodes the operation code section of the instruction stored in the first instruction register 12A to thereby generate the signal CALL, and then sends to the conflict detecting machine 14.

The first register 140A in the conflict detecting machine 14, since the first register decoder 13A sends the signal CALL and the second register address RA2 to the first register 140A, stores therein the second register address RA2 indicating the register r19, at an end of the instruction cycle of the call instruction. Also, the first register 140A still holds zero during the call instruction cycle. Thus, the gate circuit 145A sends [0] as the signal WAIT1 to the first instruction decoder 15A.

The first instruction decoder 15A, since the signal WAIT1 from the conflict detecting machine 14 is at [0], decodes the operation code section of the instruction stored in the first instruction register 12A to generate the signal CALL as the first decode signal OP1. This signal CALL is sent to the first operation unit 16A. Also, the first instruction decoder 15A sends the first operand indicator of the instruction stored in the first instruction register 12A, namely, the function code Func, in its original state, to the first operation unit 16A.

The first operation unit 16A generates a instruction address corresponding to the function code Func since the signal CALL is inputted to the first operation unit 16A from the first instruction decoder 15A. This instruction address is sent through a route (not shown) to the second fetch machine 11B. Thus, the execution of the call instruction [call Func, r19] is completed. Also, the second fetch machine 11B is actuated. So, the executions of the first and second instruction sequences are started at the same time.

At the next instruction cycle, the first fetch machine 11A fetches the add instruction [add r24, r20] from the external memory 10A to store in the first instruction register 12A. In parallel with that operation, the second fetch machine 11B fetches the mov instruction [mov r0, r19] from the internal memory 10B to store in the second instruction register 12B.

The first register decoder 13A decodes the first and second operand indicators of the instruction stored in the first instruction register 12A, respectively to thereby generate a first register address RA1 indicating the register r24 and a second register address RA2 indicating the register r25, and then sends to the conflict detecting machine 14 and the register file 17. Simultaneously, the first register decoder 13A decodes the operation code section of the instruction stored in the first instruction register 12A to generate a signal ADD indicative of the add instruction. Thus, the signal CALL and the signal RET are not generated.

On the other hand, the second register decoder 13B decodes the first and second operand indicators of the instruction stored in the second instruction register 12B, respectively, and generates a third register address RA3 indicating the register r0 and a fourth register address RA4 indicating the register r19, and sends to the conflict detecting machine 14 and the register file 17. Simultaneously, the second register decoder 13B decodes the operation code section of the instruction stored in the second instruction register 12B, and generates the signal MOV indicative of the mov instruction. Thus, the signal CALL and the signal RET are not generated.

The first register 140A in the conflict detecting machine 14, since any of the signal CALL from the first register decoder 13A and the signal RET from the second register decoder 13B is not sent to the first register 140A, still holds the register address indicating the register r19 set by the previous execution of the call instruction. Thus, the first zero detecting circuit 143A outputs [0] as the zero detection signal. In this case, the first register address RA1 is the register address indicating the register r24. Thus, the first source comparator 141A outputs [0] as the comparison result signal. Also, the second register address RA2 is the register address indicating the register r25. Hence, the first destination comparator 142A outputs [0] as the comparison result signal. As a result, since the first OR gate 144A outputs [0], the first gate circuit 145A generates [0] as the signal WAIT1, and sends to the first instruction decoder 15A.

On the other hand, the second register 140B in the conflict detecting machine 14, since any of the signal CALL from the second register decoder 13B and the signal RET from the first register decoder 13A is not sent, still holds zero that is the initial value. Thus, the second zero detecting circuit 143B outputs [1] as the zero detection signal. As a result, the second gate circuit 145B generates [0] as the signal WAIT2, irrespectively of the first and second register addresses RA1, RA2, and sends to the second instruction decoder 15B.

The first instruction decoder 15A, since the signal WAIT1 from the conflict detecting machine 14 is at [0], decodes the operation code section of the instruction stored in the first instruction register 12A to generate the signal ADD indicative of the add instruction as the first decode signal OP1. This signal ADD is sent to the first operation unit 16A. Since the signal ADD from the first instruction decoder 15A is inputted to the first operation unit 16A, the first operation unit 16A adds the data outputted from the register r24 indicated by the first register address RA1 and the data outputted from the register r25 indicated by the second register address RA2, in the register file 17. The addition result outputted from the first operation unit 16A is stored in the register r25. So, the execution of the add instruction [add r24, r25] is completed.

On the other hand, in parallel with the execution of the add instruction, the second instruction decoder 15B, since the signal WAIT2 from the conflict detecting machine 14 is at [0], decodes the operation code section of the instruction stored in the second instruction register 12B to generate the signal MOV indicative of the mov instruction as the second decode signal OP2. This signal MOV is sent to the second operation unit 16B. Since the signal MOV from the second instruction decoder 15B is inputted to the second operation unit 16B and also the register r0 is indicated as the first operand, the second operation unit 16B generates and outputs zero. This output from the second operation unit 16B is stored in the register r19 indicated by the second register address RA2, in the register file 17. So, the execution of the mov instruction [mov r0, r19] is completed. Then, the execution of the add instruction [add, r24, r25] and the execution of the mov instruction [mov r0, r19] are completed at the same time.

After that, the first fetch machine 11A sequentially fetches instructions placed after the add instruction [add r24, r25], and the first operation unit 16A sequentially executes the fetched instructions. In parallel with this execution, the second fetch machine 11B sequentially fetches the add instruction [add r20, r19], the add instruction [add r21, r19] and the ret instruction, and the second operation unit 16B sequentially executes the fetched instructions. In addition, the operations of the add instruction [add r20, r19] and the add instruction [add r21, r19] are equal to the operation of the add instruction [add r24, r25] in the first instruction sequence.

By the way, in the example of the program shown in Fig. 4, the operation of the information processing apparatus differs depending on whether or not the cpm instruction [cmp 0, r19] in the first instruction sequence is executed earlier than the ret instruction in the second instruction sequence.

At first, the case is described in which the ret instruction in the second instruction sequence is executed earlier than the [cmp 0, r19] in the first instruction sequence. In this case, when the second fetch machine 11B fetches the ret instruction from the internal memory 10B to store in the second instruction register 12B. the second register decoder 13B decodes the operation code section of the instruction stored in the second instruction register 12B to generate the signal RET. This signal RET is sent to the conflict detecting machine 14. Since the ret instruction does not have the operation code section, the third and fourth register addresses RA3, RA4 are not generated.

The second register 140B in the conflict detecting machine 14, since the signal CALL from the second register decoder 13B is not sent to the second register 140B, still holds zero that is the initial value. Thus, the second gate circuit 145B generates [0] as the signal WAIT2 to send to the second instruction decoder 15B.

The second instruction decoder 15B, since the signal WAIT2 from the conflict detecting machine 14 is at [0], decodes the operation code section of the instruction stored in the second instruction register 12B to generate the signal RET, and then sends the signal RET to the second operation unit 16B. The second operation unit 16B stops the operation based on the input of the signal RET. So, the execution of the ret instruction is completed. After that, the operation of the second fetch machine 11B is stopped until the execution of the call instruction in the first instruction sequence.

On the other hand, the content of the first register 140A in the conflict detecting machine 14 is cleared by the signal RET sent by the second register decoder 13B, at the end of the ret instruction cycle. Thus, the first gate circuit 145A always generates [0] as the signal WAIT1 from the next instruction cycle to send to the first instruction decoder 15A. As a result, the execution of the instruction in the first instruction sequence is never inhibited. Hence, it is also possible to execute the cmp instruction [cmp 0, r19]

The case is described in which the cmp instruction [cmp 0, r19] in the first instruction sequence is executed simultaneously with or earlier than the ret instruction in the second instruction sequence. In this case, when the first fetch machine 11A fetches the cmp instruction [cmp 0, r19] from the external memory 10A to store in the first instruction register 12A, the first register decoder 13A decodes the second operand indicator of the instruction stored in the first instruction register 12A to thereby generate the second register address RA2 indicating the register r19, and sends the second register address RA2 to the conflict detecting machine 14 and the register file 17. Also, the first register decoder 13A decodes the operation code section of the instruction stored in the first instruction register 12A to generate a signal CMP indicative of the cmp instruction. Thus, the signal CALL and the signal RET are not generated.

Since the signal RET is not sent to the first register 140A by the second register decoder 13B prior to the execution of the cmp instruction, the first register 140A still holds the register address indicating the previously set register r19. Thus, the first zero detecting circuit 143A outputs [0] as the zero detection signal. In this case, the second register address RA2 is the register address indicating the register r19. Hence, the first destination comparator 142A outputs [1] as the comparison result signal. As a result, since the first OR gate 144A outputs [1], the first gate circuit 145A generates [1] as the signal WAIT1 to send to the first instruction decoder 15A.

The first instruction decoder 15A, since the signal WAIT1 from the conflict detecting machine 14 is at [1], does not decode the operation code section of the instruction stored in the first instruction register 12A to generate the first inhibition signal. This first inhibition signal is sent to the first operation unit 16A. Thus, the operation of the first operation unit 16A is inhibited, and the execution of the instruction in the first instruction sequence is stopped. At this time, it is controlled such that the first fetch machine 11A stops the operation for fetching the instruction.

Under the transition in this condition, the execution of the ret instruction in the second instruction sequence causes the content of the first register 140A in the conflict detecting machine 14 to be cleared. Accordingly, the first gate circuit 145A generates [0] as the signal WAIT1 to send to the first instruction decoder 15A.

The first instruction decoder 15A, since the signal WAIT1 from the conflict detecting machine 14 is at [0], decodes the operation code section of the instruction sent by the first register decoder 13A to generate the signal CMP indicative of the cmp instruction, and then sends the signal CMP to the first operation unit 16A. Since the signal CMP is inputted from the first instruction decoder 15A to the first operation unit 16A, the first operation unit 16A compares the immediate value [0] sent through the first instruction decoder 15A from the first instruction register 12A with the register r19 indicated by the second register address RA2 in the register file 17 to set the comparison result for a status register (not shown). So, the execution of the cmp instruction [cmp, 0. r19] is completed. After that, the instructions in the first instruction sequence are sequentially executed.

In the above-mentioned explanation, the case is described in which the second instruction sequence is called from the call instruction in the first instruction sequence. Conversely, even in a case in which the first instruction sequence is called from the call instruction in the second instruction sequence, it can be operated perfectly similar to the above-mentioned case.

The information processing apparatus according to this first embodiment, if the instructions in the first and second instruction sequences conflict with each other in the condition that both the instruction sequences are processed in parallel with each other, makes one of the conflicting instructions wait until the release of the conflict state, and resumes the parallel process after the release of the conflict state. Thus, the execution stop time of the instruction under the parallel process can be reduced to a minimum. Hence, it is possible to improve the process speed as a whole.

This information processing apparatus is suitable for a processor in an assembling system that requires a fast control, such as a control of a hard disc and an engine control of a car. In such a processor, the second instruction sequence serves as a function (sub routine) at an end, in many cases. So, the execution time of the second instruction sequence occupies about 90 % of the whole. Thus, it is possible to attain a sufficiently fast process without the function of further calling a third instruction sequence from the second instruction sequence.

### (Second Embodiment)

In an information processing apparatus according to a second embodiment, instructions in three instruction sequences of a first instruction sequence, a second instruction sequence and a third instruction sequence are executed at the same time.

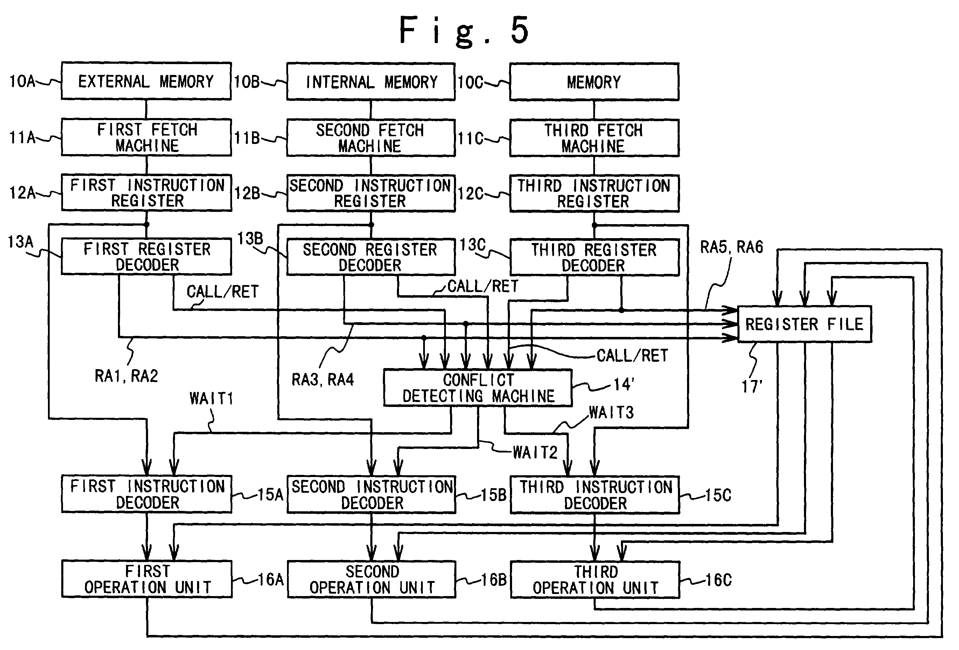

Fig. 5 is a block diagram showing the configuration of the information processing apparatus according to the second embodiment of the present invention. This information processing apparatus is provided with a memory 10C, a third fetch machine 11C, a third instruction register 12C, a third register decoder 13C, a third instruction decoder 15C and a third operation unit 16C, in addition to the configuration of the information processing apparatus shown in Fig. 2, in order to process the third instruction sequence.

The memory 10C, the third fetch machine 11C, the third instruction register 12C, the third register decoder 13C, the third instruction decoder 15C and the third operation unit 16C have the same configurations and functions as those of the external memory 10A, the first fetch machine 11A, the first instruction register 12A, the first register decoder 13A, the first instruction decoder 15A and the first operation unit 16A, respectively.

A register file 17' is constituted by, for example, a six-port RAM having 32 registers r0 to r31. This register file 17' receives a fifth register address RA5 and a sixth register address RA6 from the third register decoder 13C, in addition to the first to fourth register addresses RA1 to RA4 from the first and second register decoders 13A, 13B.

When this register file 17' receives the fifth and sixth register addresses RA5, RA6 from the third register decoder 13C, data is read out from a register indicated by the fifth register address RA5 and a register indicated by the sixth register address RA6 to be sent to the third operation unit 16C. Also, the data from the third operation unit 16C is written to a register indicated by the sixth register address RA6.

Moreover, a conflict detecting machine 14' generates a signal WAIT3, in accordance with the fifth and sixth register addresses RA5, RA6, the signal CALL and the signal RET from the third register decoder 13C, in addition to the function of the conflict detecting machine 14 according to the first embodiment. The signal WAIT3 becomes at [1] if the instruction stored in the third instruction register 12C can be executed simultaneously with the instruction stored in the second instruction register 12B, and becomes at [0] if it can not. This signal WAIT3 is sent to the third instruction decoder 15C.

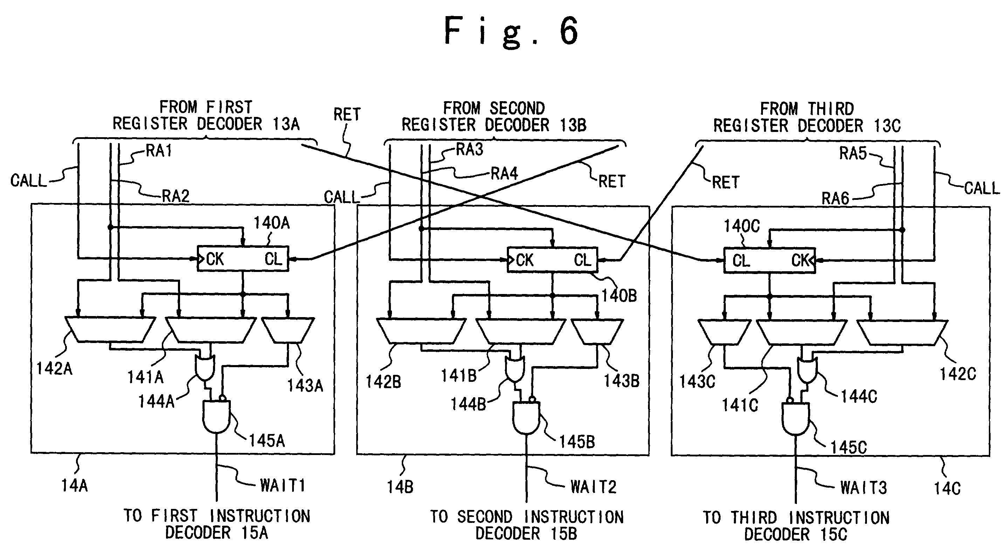

Fig. 6 shows the detailed configuration of the conflict detecting machine 14'. This conflict detecting machine 14' has a third conflict detector 14C in addition to the configuration described with reference to Fig. 3. This third conflict detector 14C is composed of a third register 140C, a third source comparator 141C, a third destination comparator 142C, a third zero detecting circuit 143C, a third OR gate 144C and a third gate circuit 145C. The configuration and the function of the third conflict detector 14C are equal to those of the first conflict detector 14A.

In the conflict detecting machine 14' shown in Fig. 6, in order to enable the call of the second instruction sequence from the first instruction sequence, the call of the third instruction sequence from the second instruction sequence and the call of the first instruction sequence from the third instruction sequence, the signal RET from the second register decoder 13B is sent to the clear input terminal CL of the first register 140A, the signal RET from the third register decoder 13C is sent to the clear input terminal CL of the second register decoder 140B, and the signal RET from the first register decoder 13A is sent to the clear input terminal CL of the third register 140C, respectively.

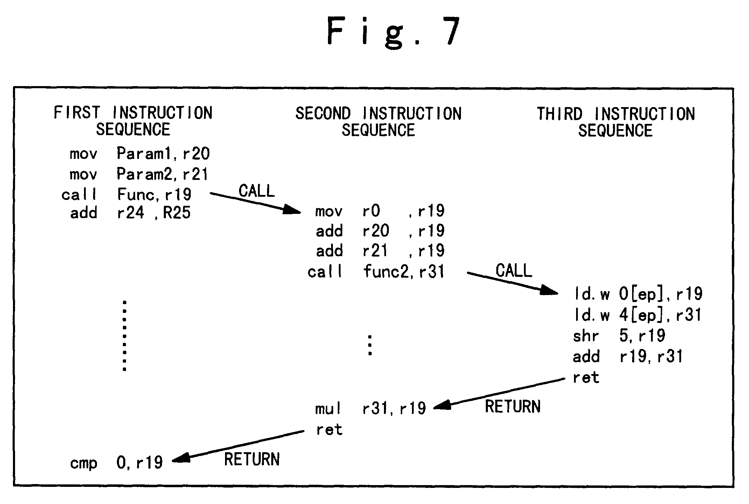

According to the information processing apparatus having the above-mentioned configuration, for example, as shown in Fig. 7, the third instruction sequence can be called from the second instruction sequence, and after that, it can be returned to the second instruction sequence. The operation in this case is equal to the operation for calling the second instruction sequence from the first instruction sequence and then returning to the first instruction sequence, as described in the first embodiment. Thus, the detailed explanation is omitted.

In the information processing apparatus according to this second embodiment, the second instruction sequence can be called from the first instruction sequence, and further the third instruction sequence can be called from the second instruction sequence, and accordingly the respective instructions in the first to third instruction sequences can be executed at the same time. Thus, it is possible to further improve the process speed as the whole information processing apparatus.

In this second embodiment, the second instruction sequence can be called from the first instruction sequence, the third instruction sequence can be called from the second instruction sequence, and the first instruction sequence can be called from the third instruction sequence. However, it may be designed such that the call can be done between the respective instruction sequences. In this case, it may be designed such that a signal in which the logical OR is carried out between the signal RET from the second register decoder 13B and the signal RET from the third register decoder 13C is sent to the clear input terminal CL of the first register 140A, and a signal in which the logical OR is carried out between the signal RET from the third register decoder 13C and the signal RET from the first register decoder 13A is sent to the clear input terminal CL of the second register 140B, and a signal in which the logical OR is carried out between the signal RET from the first register decoder 13A and the signal RET from the second register decoder 13B is sent to the clear input terminal CL of the third register 140C, respectively.

### (Third Embodiment)

The first embodiment has the configuration in which the same register file is shared between the main routine and the sub routine, for the purpose of simple illustration. However, when one register file is shared between the routines having the possibility that the simultaneous execution may be done, for example, the re-writing operation must be inhibited if there is the conflict register between the respective routines. Thus, the management of the register becomes complex. So, usually, a register and bank switching technique is used in which a dedicated register file is prepared for each routine and then the routine and the register file are switched at the same time.

However, for example, if the data in the main routine must be read out to be processed in the sub routine, the content of the register for the main routine can not be processed unless it is copied to the register file for the sub routine. Thus, the process is delayed by a time necessary for the copy.

As a technique for solving this delay, there is a register window technique for preparing a register area dedicated to the main routine and a register area dedicated to the sub routine. Since each register area is determined in accordance with a hardware, this technique can not change it. This results in a problem that the size of the common area can not be changed, a non-used register occurs depending on an application, or a register is lacking.

So, this third embodiment is designed such that the register file for the main routine can be directly referred in the sub routine and thereby the register file for the main routine can be used as if it is the common area. Thus, the process speed is improved since the copy is not required before the execution of the sub routine. In the information processing apparatus according to the first embodiment, the application of the following register file enables the simultaneous execution to be effectively done, and enables the process speed improved by the conflict detecting to be further improved.

In the information processing apparatus according to this third embodiment, the register file 17 in the first embodiment is replaced by a register file 17' constituted by two banks of a first register file 20 and a second register file 21. In this information processing apparatus, only the first register file 20 is used in the execution of the first instruction sequence. And, the first register file 20 or the second register file 21 is used depending on a state of a write-completion flag 22, in the execution of the second instruction sequence.

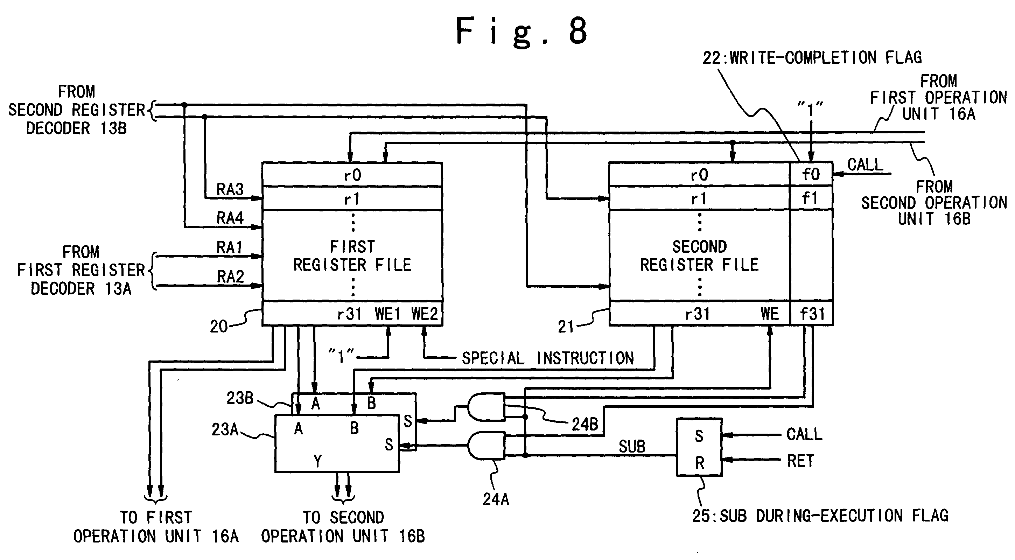

Fig. 8 is a block diagram showing the configuration of the register file 17' in the information processing apparatus according to the third embodiment of the present invention. This register file 17' is composed of the first register file 20, the second register file 21, the write-completion flag 22, selectors 23A, 23B, AND gates 24A, 24B and a sub during-execution flag 25.

The first and second register addresses RA1, RA2 from the first register decoder 13A are sent to the first register file 20. The third and fourth register addresses RA3, RA4 from the second register decoder 13B are sent to both the first and second register files 20, 21. Although its route is omitted, if the first operand indicator of the instruction in the first instruction sequence is an immediate value, its immediate value is sent to the first operation unit 16A, in its original state. Also, if the first operand indicator of the instruction in the second instruction sequence is an immediate value, its immediate value is sent to an input terminal B of the selector 23A, in its original state.

The first register file 20 is composed of, for example, 32 registers r0, r1 to r31. This first register file 20 is constituted by RAM having four output ports (first to fourth output ports) and two write ports (first and second write ports). A content of a register indicated by the first register address RA1 is read out from the first output port of the first register file 20, and a content of a register indicated by the second register address RA2 is read out from the second output port, respectively, and the read out contents are sent to the first operation unit 16A. Also, a content of a register indicated by the third register address RA3 is read out from the third output port to be sent to an input terminal A of the selector 23A. And, a content of a register indicated by the fourth register address RA4 is read out from the fourth output port to be sent to an input terminal A of the selector 23B.

The first write port of the first register file 20 is always set at a write-enable state. If a instruction involving a writing operation is executed in the first instruction sequence, the data from the first operation unit 16A is written through the first write port to the register indicated by the second register address RA2. Also, the second write port is set at the write-enable state when a later-described special instruction is executed. Then, the data from the second operation unit 16B is written through the second write port to the register indicated by the fourth register address RA4.

The second register file 21 is composed of, for example, 32 registers r0, r1 to r31. This second register file 21 is constituted by RAM having two output ports (first and second output ports) and one write port. A content of a register indicated by the third register address RA3 is read out from the first output port of the second register file 21 to be sent to the input terminal B of the selector 23A. Also, a content of a register indicated by the fourth register address RA4 is read out from the second output port of the second register file 21 to be sent to the input terminal B of the selector 23B.

Also, the write port of the second register file 21 is set at the write-enable state in the condition that a signal SUB from the sub during-execution flag 25 is at [1], namely, in the condition that the sub routine is executed. If the instruction involving the writing operation is executed in the second instruction sequence, the data from the second operation unit 16B is written through the write port to the register indicated by the fourth register address RA4.

The write-completion flag 22 is composed of 32 flags f0, f1 to f31. The 32 flags f0, f1 to f31 correspond to the 32 registers r0, r1 to r31 constituting the second register file 21, respectively. The write-completion flag 22 is constituted by a two-port RAM of 32 bits having two output ports (first and second output ports) and one write port. In addition, this write-completion flag 22 may be constituted by a register, a flip-flop and the like.

A flag indicated by the third register address RA3 is read out from the first output port of the write-completion flag 22 to be sent to the AND gate 24A. Also, a flag indicated by the fourth register address RA4 is read out from the second output port to be sent to the AND gate 24B.

If the instruction involving the writing operation is executed in the condition that the signal SUB from the sub during-execution flag 25 is at [1], namely, in the condition that the instruction in the second instruction sequence is executed, the flag indicated by the fourth register address RA4 of the write-completion flag 22 is set to [1]. Moreover, all the flags of the write-completion flag 22 are cleared to [0] all at once when the call instruction is executed in the first instruction sequence, namely, if the signal CALL from the first register decoder 13A is set to [1].

The selector 23A selects the data from the third output port of the first register file 20 or the data from the first output port of the second register file 21, in accordance with a selection signal from the AND gate 24A to send to the second operation unit 16B as the data of the first operand. Similarly, the selector 23B selects the data from the fourth output port of the first register file 20 or the data from the second output port of the second register file 21, in accordance with a selection signal from the AND gate 24B to send to the second operation unit 16B as the data of the second operand.

The sub during-execution flag 25 stores whether or not the second instruction sequence is under execution. This sub during-execution flag 25 is cleared to [0] if the second instruction sequence is not under execution, and set to [1] if it is under execution. Actually, this sub during-execution flag 25 is set to [1] when the signal CALL from the first register decoder 13A becomes at [1], and it is cleared to [0] when the signal RET from the second register decoder 13B becomes at [1]. This signal SUB outputted from the sub during-execution flag 25 is sent to the AND gates 24A, 24B and a write-enable terminal WE of the second register file 21.

The AND gate 24A carries out the logical AND between the signal from the first output port of the write-completion flag 22 and the signal SUB from the sub during-execution flag 25, and sends its result to a selection terminal S of the selector 23A. If the second instruction sequence is not under execution, the signal SUB from the sub during-execution flag 25 is at [0]. Thus, the AND gate 24A outputs [0]. As a result, the input terminal A of the selector 23A is selected. Hence, if the second instruction sequence is not under execution, the data from the third output port of the first register file 20 is sent to the second operation unit 16B as the data of the first operand.

On the other hand, if the second instruction sequence is under execution, the signal SUB from the sub during-execution flag 25 is at [1]. Thus, the output of the AND gate 24A is determined by the signal from the first output port of the write-completion flag 22. That is, if the signal from the first output port of the write-completion flag 22 is at [0] (a non-written state), the AND gate 24A outputs [0]. Accordingly, the input terminal A of the selector 23A is selected. Hence, the data from the third output port of the first register file 20 is sent to the second operation unit 16B as the data of the first operand. On the other hand, if the signal from the first output port of the write-completion flag 22 is at [1] (a write-completion state), the AND gate 24A outputs [1]. Accordingly, the input terminal B of the selector 23A is selected. Hence, the data from the first output port of the second register file 21 is sent to the second operation unit 16B as the data of the first operand.

Similarly, the AND gate 24B carries out the logical AND between the signal from the second output port of the write-completion flag 22 and the signal SUB from the sub during-execution flag 25, and sends its result to a selection terminal S of the selector 23B. If the second instruction sequence is not under execution, the signal SUB from the sub during-execution flag 25 is at [0]. Thus, the AND gate 24B outputs [0]. As a result, the input terminal A of the selector 23B is selected. Hence, if the second instruction sequence is not under execution, the data from the fourth output port of the first register file 20 is sent to the second operation unit 16B as the data of the second operand.

On the other hand, if the second instruction sequence is under execution, the signal SUB from the sub during-execution flag 25 is at [1]. Thus, the output of the AND gate 24B is determined by the signal from the second output port of the write-completion flag 22. That is, if the signal from the second output port of the write-completion flag 22 is at [0] (the non-written state), the AND gate 24B outputs [0]. Accordingly, the input terminal A of the selector 23B is selected. Hence, the data from the fourth output port of the first register file 20 is sent to the second operation unit 16B as the data of the second operand. On the other hand, if the signal from the second output port of the write-completion flag 22 is at [1] (the write-completion state), the AND gate 24B outputs [1]. Accordingly, the input terminal B of the selector 23B is selected. Hence, the data from the second output port of the second register file 21 is sent to the second operation unit 16B as the data of the second operand.

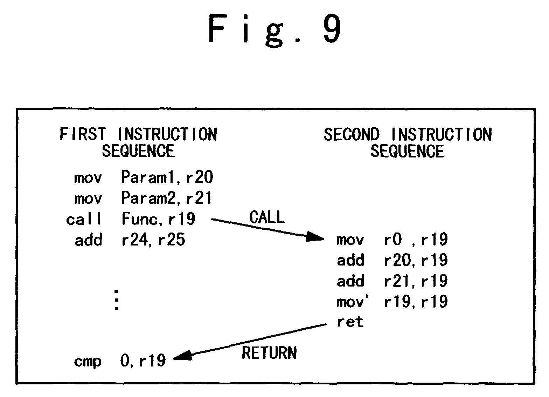

The operation of the information processing apparatus having the above-mentioned configuration will be described below by exemplifying the execution of a program shown in Fig. 9. The program shown in Fig. 9 is different from the program shown in Fig. 4 only in the fact that a mov' instruction [mov' r19, r19] is added between the ret instruction and the add instruction [add r21, r19] in the second instruction sequence. This mov' instruction [mov' r19, r19] is a special instruction having a function of transferring the content of the register r19 in the second register file 21 to the register r19 in the first register file 20. Incidentally, it is assumed that the sub during-execution flag 25 is set to zero in the initial state and that the contents of the write-completion flag 22 are all set to zero.

In this information processing apparatus, the mov instruction [mov Param1, r20] and the mov instruction [mov Param2, r21] are executed similarly to the case of the first embodiment, except that the first register file 20 is used instead of the register file 17.

Also, when the call instruction [call Func r19] is executed, the following operations are executed in addition to the operations described in the first embodiment. That is, the signal CALL generated by the first instruction decoder 15A is sent to the sub during-execution flag 25 and the write-completion flag 22. Thus, the sub during-execution flag 25 is set to [1], and all bits of the write-completion flag 22 are cleared to zero. The execution of the call instruction [call Func, r19] is completed by the above-mentioned operations, and the second fetch machine 11B is actuated. After that, the simultaneous execution of the first and second instruction sequences is started.

At the next instruction cycle, the first fetch machine 11A fetches the add instruction [add r24, r25] from the external memory 10A to store in the first instruction register 12A. In parallel with this operation, the second fetch machine 11B fetches the mov instruction [mov r0, r19] from the internal memory 10B to store in the second instruction register 12B. The add instruction [add r24, r25] is executed similarly to the operation in the first embodiment, except that the first register file 20 is used instead of the register file 17. On the other hand, the mov instruction [mov r0, r19] is executed similarly to the operation in the first embodiment, except that the second register file 21 is used instead of the register file 17. And, when the mov instruction [mov r0, r19] is executed, the flag f19 of the write-completion flag 22 is set to [1].

Next, the add instruction [add r20, r19] in the second instruction sequence is executed as follows. That is, the second register decoder 13B decodes the first operand indicator of the instruction stored in the second instruction register 12B to generate a third register address RA3 indicating the register r20, and then sends the third register address RA3 to the first register file 20, the second register file 21 and the write-completion flag 22. So, a content of the register r20 is read out from the third output port of the first register file 20 to be sent to the input terminal A of the selector 23A. Similarly, a content of the register r20 is read out from the first output port of the second register file 21 to be sent to the input terminal B of the selector 23A. Also, the flag f20 is read out from the first output port of the write-completion flag 22 to be sent to the AND gate 24A.

Similarly, the second register decoder 13B decodes the second operand indicator of the instruction stored in the second instruction register 12B to generate the fourth register address RA4 indicating the register r19, and then sends the fourth register address RA4 to the first register file 20, the second register file 21 and the write-completion flag 22. So, a content of the register r19 is read out from the fourth output port of the first register file 20 to be sent to the input terminal A of the selector 23B. Similarly, a content of the register r19 is read out from the second output port of the second register file 21 to be sent to the input terminal B of the selector 23B. Also, the flag f19 is read out from the second output port of the write-completion flag 22 to be sent to the AND gate 24B.

Here, the sub during-execution flag 25 is set to [1], and [0] is read out as the flag f20 from the first output port of the write-completion flag 22. So, the AND gate 24A outputs [0]. Thus, since the input terminal A of the selector 23A is selected, the data from the first output port of the first register file 20, namely, the content of the register r20 is sent to the second operation unit 16B as the data of the first operand. Also, [1] is read out as the flag f19 from the second output port of the write-completion flag 22. Hence, the AND gate 24B outputs [1]. Accordingly, since the input terminal B of the selector 23B is selected, the data from the second output port of the second register file 21, namely, the content of the register r19 is sent to the second operation unit 16B as the data of the second operand.

The second operation unit 16B adds the data from the selector 23A and the data from the selector 23B, and sends its result to the write port of the second register file 21. At this time, since the instruction during the execution is not the special instruction, [0] is sent to an write-enable terminal WE2 of the first register file 20. Since the sub during-execution flag 25 is at [1], [1] is sent to a write-enable terminal WE of the second register file 21. Thus, the calculated result is written to the register r19 indicated by the fourth register address RA4, in the second register file 21. Incidentally, the flag f19 in the write-completion flag 22 is already set to [1]. The content of the register r20 in the first register file 20 and the content of the register r19 in the second register file 21 are added by the above-mentioned operations. Its result is stored in the register r19 in the second register file 21. So, the execution of the add instruction [add r20, r19] is completed.

A next add instruction [add r21, r19] is also executed similarly to the operation of the add instruction [add r20, r19]. That is, a content of the register r21 in the first register file 20 and a content of the register r19 in the second register file 21 are added, and Its result is stored in the register r19 in the second register file 21. So, the execution of the add instruction [add r21, r19] is completed.

Next, the mov' instruction [mov' r19, r19] is executed. This operation of the mov' instruction [mov' r19, r19] is equal to the mov instruction which is firstly executed in the second instruction sequence, except that the register r19 is indicated instead of the indication of the register r0 by the first operand indicator and that the register r19 indicated by the second operand indicator is changed to be the register r19 in the first register file 20. This execution of the mov' instruction causes the data stored in the register r19 in the second register file 21 as the function return value to be transferred to the register r19 in the first register file 20.

Next, when the second fetch machine 11B fetches the ret instruction from the internal memory 10B to store in the second instruction register 12B, the following operations are carried out in addition to the operations described in the first embodiment. That is, the signal RET generated by the second instruction decoder 15B is sent to the sub during-execution flag 25. Thus, the sub during-execution flag 25 is cleared to [0]. Hence, the second register file 21 is not used from the next instruction cycle. Other operations are equal to those of the embodiment 1.

As mentioned above, the information processing apparatus according to this third embodiment is designed such that when the register indicated by the instruction in the second instruction sequence is read out, if the writing operation is not still done to the indicated register in the second register file 21, the data is read out from the corresponding register in the first register file 20, and when the writing operation is done, the data is read out from the indicated register in the second register file 21. Thus, when the second instruction sequence is called from the first instruction sequence, it is not necessary to transfer the parameter stored in the first register file 20 to the second register file 21. Thus, it is possible to make the process speed faster. Also, the above-mentioned configuration enables the operation equal to the operation for switching any number of registers from the first register file to the second register file to be done. Hence, there is no case that the fixed size of the common area causes the non-used register to be induced and also causes the register to be lacking, depending on the application.

In the third embodiment, the number of registers in the second register file 21 is equal to that of the first register file 20. However, the number of registers in the second register file 21 may be smaller than that of the number of registers in the first register file 20. In the typical application, about half of the register files is used as an address pointer area and a parameter area, in which it is not necessary to check in the second instruction sequence. Thus, this configuration has the merit of reducing the number of registers in the whole register file.

Also, the information processing apparatus according to the third embodiment is designed so as to have the two register files. However, the information processing apparatus for executing the three instruction sequences at the same time, such as the second embodiment, may be designed so as to have three register files corresponding to the respective instruction sequences.

As detailed above, according to the present invention, it is possible to provide the information processing apparatus and the information processing method, which can carry out the parallel process even if there is the dependent relation between the instructions included each of the plurality of instruction sequences, and can improve the process speed as a whole.

## Claims

1. An information processing apparatus, comprising:
a first fetch unit (11A) fetching a first instruction of a first instruction sequence;
a first instruction executing unit (16A) executing said first instruction;
a second fetch unit (11B) fetching a second instruction of a second instruction sequence;
a second instruction executing unit (16B) executing said second instruction: and
a conflict judging unit (14) judging whether or not said first and second instructions can be executed at a same time, and
wherein said first and second instruction executing units (16A, 16B) execute at the same time said first and second instructions judged to be executed at the same time by said conflict judging unit (14), respectively.

2. An information processing apparatus according to Claim 1, wherein said conflict judging unit (14) starts judging said first and second instructions in response to a call instruction of said first instruction sequence and finishes judging said first and second instructions in response to a return instruction of said second instruction sequence, said second instruction sequence being called in response to said call instruction and said first instruction sequence being returned in response to said return instruction.

3. An information processing apparatus according to Claim 2, wherein when an operand (RA2) of said call instruction is included in a specific instruction to be executed by said first instruction executing unit (16A) after said execution of said call instruction, said conflict judging unit (14) judges that said specific instruction and said second instruction cannot be executed at the same time.

4. An information processing apparatus according to Claim 3, wherein said conflict judging unit (14) includes:
a register (140A) to which an address of said operand (RA2) of said call instruction is set in response to said call instruction and in which said address is cleared in response to said return instruction;
a comparator (142A) comparing said address set to said register (140A) with an address of an operand of said specific instruction; and
a gate circuit (145A) generating a signal (WAIT1) indicating whether or not said specific instruction and said second instruction can be executed at the same time, based on the comparing result.

5. An information processing apparatus according to any one of Claims 1 to 4, wherein said conflict judging unit (14) starts judging said first and second instructions in response to a first call instruction of said first instruction sequence and finishes judging said first and second instructions in response to a first return instruction of said second instruction sequence, said second instruction sequence being called in response to said first call instruction and said first instruction sequence being returned in response to said first return instruction and starts judging said first and second instructions in response to a second call instruction of said second instruction sequence and finishes judging said first and second instructions in response to a second return instruction of said first instruction sequence, said first instruction sequence being called in response to said second call instruction and said second instruction sequence being returned in response to said second return instruction.

6. An information processing apparatus according to Claim 5, wherein when an operand (RA2) of said first call instruction is included in a first specific instruction to be executed by said first instruction executing unit (16A) after an execution of said first call instruction, said conflict judging unit (14) judges that said first specific instruction and said second instruction cannot be executed at the same time and when an operand (RA2) of said second call instruction is included in a second specific instruction to be executed by said second instruction executing unit (16B) after an execution of said second call instruction, said conflict judging unit (14) judges that said second specific instruction and said first instruction cannot be executed at the same time.

7. An information processing apparatus according to Claim 6, wherein said conflict judging unit (14) includes:
a first register (140A) to which a first address of said operand (RA2) of said first call instruction is set in response to said first call instruction and in which said first address is cleared in response to said first return instruction;
a first comparator (142A) comparing said first address set to said first register (140A) with an address of an operand of said first specific instruction to generate a first comparing result;
a first gate circuit (145A) generating a first signal (WAIT1) indicating whether or not said first specific instruction and said second instruction can be executed at the same time, based on said first comparing result;
a second register (140B) to which a second address of said operand (RA2) of said second call instruction is set in response to said second call instruction and in which said second address is cleared in response to said second return instruction;
a second comparator (142B) comparing said second address set to said second register (140B) with an address of an operand of said second specific instruction to generate a second comparing result; and
a second gate circuit (145B) generating a second signal (WAIT2) indicating whether or not said second specific instruction and said first instruction can be executed at the same time, based on said second comparing result.

8. An information processing apparatus according to any one of Claims 1 to 7, further comprising:
a first register file (20) corresponding to said first instruction sequence; and
a second register file (21) corresponding to said second instruction sequence, and
wherein when data used in said second instruction of said second instruction sequence called in response to a call instruction of said first instruction sequence is not written in said second register file (21), said data is outputted from said first register file (20) through a first path, and
wherein when said data is written in said second register file (21), said data is outputted from said second register file (21) through a second path, and
wherein when said second instruction is executed based on said data outputted through one of said first and second paths to generate an executing result, said executing result is written to said second register file (21).

9. An information processing apparatus according to Claim 8, further comprising:
a flag set when said executing result is written to said second register file (21), and
wherein said data is outputted through said first path when said flag is not set, and said data is outputted through said second path when said flag is set.

10. An information processing apparatus according to Claim 9, wherein said flag is cleared when said second instruction sequence is called in response to said call instruction of said first instruction sequence.

11. An information processing method, comprising:
(a) fetching a plurality of first instructions of a first instruction sequence;
(b) fetching a plurality of second instructions of a second instruction sequence called in response to a call instruction of said plurality of first instructions;
(c) judging whether or not said first instruction and said second instruction of said plurality of fetched first and second instructions can be executed at a same time; and
(d) executing at the same time said first and second instructions judged to be executed at the same time.

12. An information processing method according to Claim 11, wherein said (c) includes starting judging said first and second instructions in response to said call instruction and finishing judging said first and second instructions in response to a return instruction of said plurality of second instructions, said first instruction sequence being returned in response to said return instruction.

13. An information processing method according to Claim 12, wherein when an operand (RA2) of said call instruction is included in a specific instruction, of said first instruction sequence, executed after an execution of said call instruction, said (c) includes judging that said specific instruction and said second instruction cannot be executed at the same time.

14. An information processing method according to Claim 13, wherein said (c) includes:
setting to a register (140A) an address of said operand (RA2) of said call instruction in response to said call instruction;
clearing said address set to said register (140A) in response to said return instruction;
comparing said address set to said register (140A) with an address of an operand of said specific instruction; and
generating a signal (WAIT1) indicating whether or not said specific instruction and said second instruction can be executed at the same time, based on the comparing result.

15. An information processing method according to any one of Claims 11 to 14, wherein said (c) includes starting judging said first and second instructions in response to a first call instruction of said first instruction sequence and finishes judging said first and second instructions in response to a first return instruction of said second instruction sequence, said second instruction sequence being called in response to said first call instruction and said first instruction sequence being returned in response to said first return instruction and starts judging said first and second instructions in response to a second call instruction of said second instruction sequence and finishes judging said first and second instructions in response to a second return instruction of said first instruction sequence, said first instruction sequence being called in response to said second call instruction and said second instruction sequence being returned in response to said second return instruction.

16. An information processing method according to Claim 15, wherein when an operand (RA2) of said first call instruction is included in a first specific instruction, of said first instruction sequence, to be executed after an execution of said first call instruction, said (c) includes judging that said first specific instruction and said second instruction cannot be executed at the same time and when an operand (RA2) of said second call instruction is included in a second specific instruction, of said second instruction sequence, to be executed after an execution of said second call instruction, said (c) includes judging that said second specific instruction and said first instruction cannot be executed at the same time.

17. An information processing method according to Claim 16, wherein said (c) includes:
setting to a first register (140A) a first address of said operand (RA2) of said first call instruction in response to said first call instruction;
clearing said first address set to said first register (140A) in response to said first return instruction;
comparing said first address set to said first register (140A) with an address of an operand of said first specific instruction to generate a first comparing result;
generating a first signal (WAIT1) indicating whether or not said first specific instruction and said second instruction can be executed at the same time, based on said first comparing result;
setting to a second register (140B) a second address of said operand (RA2) of said second call instruction in response to said second call instruction;
clearing said second address set to said second register (140B) in response to said second return instruction;
comparing said second address set to said second register (140B) with an address of an operand of said second specific instruction to generate a second comparing result; and
generating a second signal (WAIT2) indicating whether or not said second specific instruction and said first instruction can be executed at the same time, based on said second comparing result.

18. An information processing method according to any one of Claims 11 to 17, further comprising:
(e) providing a first register file (20) corresponding to said first instruction sequence;
(f) providing a second register file (21) corresponding to said second instruction sequence,
(g) outputting data used in said second instruction of said second instruction sequence called in response to said call instruction, from said first register file (20) when said data is not written in said second register file (21); and
(h) outputting said data from said second register file (21) when said data is written in said second register file (21); and
(i) writing an executing result when said second instruction is executed based on said data outputted at one of said (g) and (h), to said second register file (21).

19. An information processing method according to Claim 18, further comprising:
(j) setting a flag when said executing result is written to said second register file (21), and
wherein said data is outputted at said (g) when said flag is not set, and said data is outputted at said (h) when said flag is set.

20. An information processing method according to Claim 19, further comprising:
(k) clearing said flag when said second instruction sequence is called in response to said call instruction of said first instruction sequence.
